# EUROPEAN PATENT APPLICATION

(11) **EP 2 658 306 A1**
(43) Date of publication of application: **30.10.2013**
(21) Application number: 11856605.8
(22) Date of filing: 23.08.2011
(51) Int. Cl.: H04W 24/04

(54) **METHOD AND APPARATUS FOR ACQUIRING WIRELESS CHANNEL ENVIRONMENT INFORMATION AND WIRELESS NETWORK CONTROL DEVICE**

(30) Priority: 20.01.2011 CN 201110023389
(71) Applicant: Huawei Technologies Co., Ltd., Shenzhen, Guangdong 518129 (CN)
(72) Inventor: LIU, Lina, Shenzhen Guangdong 518129 (CN); LU, Xiaofeng, Shenzhen Guangdong 518129 (CN)
(74) Representative: Maiwald Patentanwalts GmbH
(86) International application number: PCT/CN2011/078755
(87) International publication number: WO 2012/097592

(57) **Abstract**

A method, an apparatus for acquiring for acquiring radio channel environment information, and a radio network control device are provided in embodiments of the present invention. The apparatus includes: an acquiring unit, configured to acquire a radio signal transmitted by a terminal; a channel information acquiring unit, configured to acquire pilot information from the radio signal, and calculate channel information according to the pilot information; and a storage unit, configured to record the channel information. With the method, the apparatus for acquiring radio channel environment information, and the radio network control device provided in the embodiments of the present invention, the real condition of the radio channel can be reflected accurately, and the exception to the user terminal or the network can be identified accurately, thereby improving the efficiency of exception handling.

## Description

This application claims priority to Chinese Patent Application No. 201110023389.8, filed with the Chinese Patent Office on January 20, 2011 and entitled "METHOD, APPARATUS FOR ACQUIRING RADIO CHANNEL ENVIRONMENT INFORMATION, AND RADIO NETWORK CONTROL DEVICE ", which is incorporated herein by reference in its entirety.

### FIELD OF THE INVENTION

The present invention relates to the field of communications technologies, and in particular to a method, an apparatus for acquiring radio channel environment information, and a radio network control device.

### BACKGROUND OF THE INVENTION

A radio channel refers to the path through which a radio signal is transmitted to the receiving end. During the transmission from the transmitting antenna to the receiving antenna, the radio signal will pass through various complex transmission paths, where the radio signal will suffer from various noise pollutions. Therefore, transmission loss will be caused during the transmission of the radio signal; in case of a heavy transmission loss, the radio signal will be unrecoverable. When the performance of a radio communications network deteriorates, the exception must be timely identified and handled to ensure sound user experience.

In the prior art, when the network performance deteriorates, it is difficult to know the real channel condition through drive test manually. In this case, it is difficult to identify and handle the exception to the user terminal or network.

### SUMMARY OF THE INVENTION

Embodiments of the present invention provide a method, an apparatus for acquiring radio network environment information, and a radio network control device, so as to solve the problems in the prior art that when the network performance deteriorates, the real network condition cannot be known, and the exception to the user terminal or network cannot be timely identified and handled.

An embodiment of the present invention provides an apparatus for acquiring radio network environment information, including:
an acquiring unit, configured to acquire a radio signal transmitted by a terminal;
a channel information acquiring unit, configured to acquire pilot information from the radio signal, and calculate channel information according to the pilot information; and
a storage unit, configured to record the channel information.

An embodiment of the present invention further provides a method for acquiring radio channel environment information, including:
acquiring a radio signal transmitted by a terminal;
acquiring pilot information from the radio signal, and calculating channel information according to the pilot information; and
recording the channel information.

An embodiment of the present invention further provides a radio network control device, including an apparatus for acquiring radio network environment information and a network operation & maintenance center, where:
the apparatus for acquiring radio network environment information is configured to acquire a radio signal transmitted by a terminal, acquire pilot information from the radio signal, calculate channel information according to the pilot information, and record the channel information; and
the network operation & maintenance center is configured to acquire the channel information from the apparatus for acquiring radio network environment information so as to identify an exception to a network.

With the method, the apparatus for acquiring radio channel environment information, and the radio network control device provided in the embodiments of the present invention, the radio signals transmitted by a terminal are received, and the channel information is calculated according to the received radio signals and then stored. In this way, when a user terminal or the network encounters an exception, the real condition of the radio channel can be reflected accurately. As a result, the exception to the user terminal or the network can be identified accurately, thereby improving the efficiency of exception handling.

### BRIEF DESCRIPTION OF THE DRAWINGS

To illustrate the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and persons of ordinary skill in the art can derive other drawings from these accompanying drawings without creative efforts.

FIG. 1 is a schematic structural diagram of a first embodiment of an apparatus for acquiring radio network environment information according to the present invention;

FIG. 2 is a schematic structural diagram of an apparatus for acquiring radio network environment information working with other devices in a radio communications network;

FIG. 3 is a schematic structural diagram of an apparatus for acquiring radio network environment information sharing an RRU with a radio network control device;

FIG. 4 is a schematic structural diagram of an apparatus for acquiring radio network environment information sharing a BBU with a radio network control device;

FIG. 5 is a schematic diagram of a tile in the uplink PUSC;

FIG. 6 is a schematic structural diagram of a second embodiment of an apparatus for acquiring radio network environment information according to the present invention;

FIG. 7 is a schematic structural diagram of a first embodiment of a radio network control device according to the present invention; and

FIG. 8 is a flow chart of a first embodiment of a method for acquiring radio channel environment information according to the present invention.

### DETAILED DESCRIPTION OF THE EMBODIMENTS

In order to make the technical solutions according to the embodiments of the present invention more comprehensible, the following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative effects shall fall within the protection scope of the present invention.

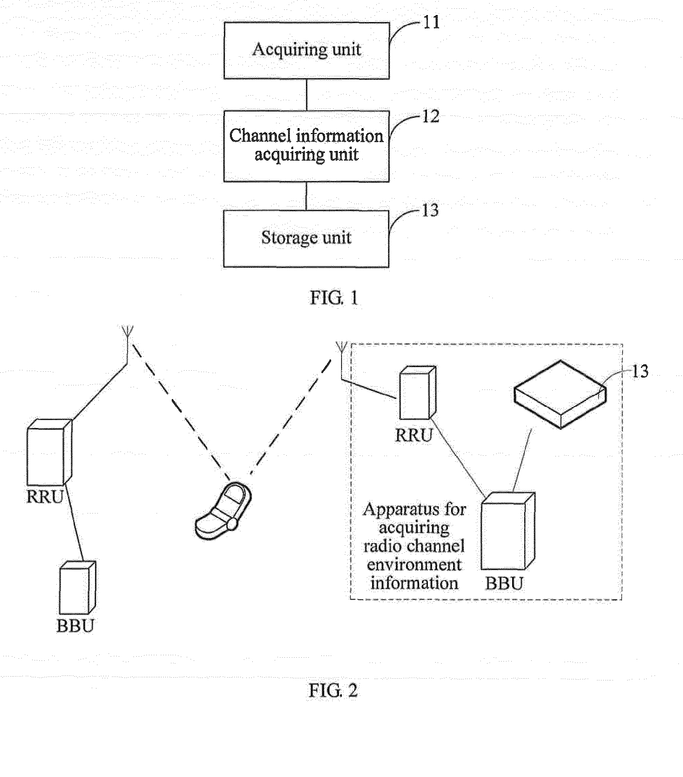

FIG. 1 is a schematic structural diagram of a first embodiment of an apparatus for acquiring radio network environment information according to the present invention. As shown in FIG. 1, the apparatus includes an acquiring unit 11, a channel information acquiring unit 12, and a storage unit 13, where:
the acquiring unit 11 is configured to acquire a radio signal transmitted by a terminal;
   and
the channel information acquiring unit 12 is configured to acquire pilot information from the radio signal, and calculate the channel information according to the pilot information;
where in an embodiment, the channel information may be a channel impulse response; and
the storage unit 13 is configured to record the channel information.

In an embodiment, the recording, by the storage unit 13, channel information may specifically be recording a channel impulse response.

This embodiment applies to multiple radio communications systems, such as Long Term Evolution (Long Term Evolution, LTE) and Worldwide Interoperability for Microwave Access (Worldwide Interoperability for Microwave Access, WiMAX).

The apparatus for acquiring radio network environment information provided in this embodiment can work with other devices, such as a base station and a radio network controller (Radio Network Controller, RNC), in a radio communications system. The apparatus for acquiring radio network environment information can be disposed on or connected to these devices. In this way, when detecting an exception to a user terminal or a receiving exception, these devices can reproduce the environment of the radio communications network, so that the exception can be timely and accurately identified.

The acquiring unit 11 can be devices such as a remote radio unit (Remote Radio Unit, RRU), where an antenna is disposed to receive a radio signal transmitted by a terminal. After the acquiring unit 11 receives the radio signal, the channel information acquiring unit 12 acquires pilot information from the radio signal, and calculates channel information according to the pilot information. The channel information acquiring unit 12 can be devices such as a base band unit (Base Band Unit, BBU).

FIG. 2 is a schematic structural diagram of an apparatus for acquiring radio network environment information connecting to and working with a radio network control device like a base station or an RNC. In the apparatus for acquiring radio network environment information, the acquiring unit 11 is an RRU, and the channel information acquiring unit 12 is a BU. In FIG. 2, the other RRU and the other BBU are functional modules on a radio network control device like a base station or an RNC.

Preferably, the apparatus for acquiring radio network environment information can share an RRU and/or a BBU with a radio network control device like a base station or an RNC.

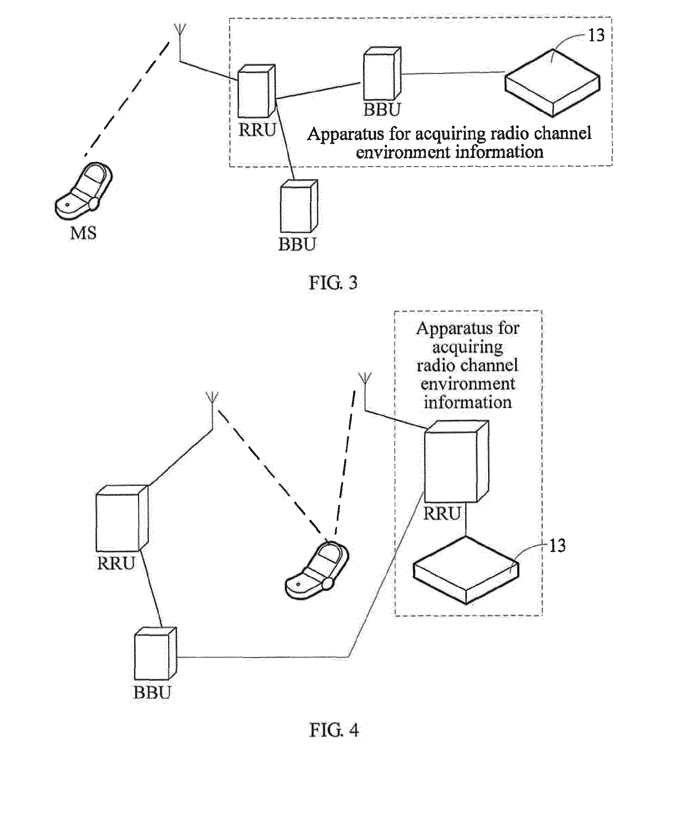

As shown in FIG 3, the apparatus for acquiring radio network environment information can share an RRU with a base station or an RNC (that is, the RRU of the base station or RNC serves as the acquiring unit 11 of the apparatus), and receive radio signals through the RRU of the base station or RNC, and then, through the channel information acquiring unit 12, acquire pilot information from the radio signals and calculate channel information according to the pilot information. This reduces the interactions between the apparatus and the base station or RNC, and makes it unnecessary to define an interaction interface between the apparatus and the base station or RNC.

Likewise, as shown in FIG. 4, the apparatus for acquiring radio network environment information can further share a BBU with a base station or an RNC (that is, the BBU of the base station or RNC serves as the channel information acquiring unit 12 of the apparatus), acquire the radio signals transmitted by the terminal through the acquiring unit 11, and then, through the BBU of the base station or RNC, acquire pilot information from the pilot signals and calculate channel information according to the pilot information. This reduces the interactions between the apparatus and the base station or RNC, and makes it unnecessary to define an interaction interface between the apparatus and the base station or RNC.

16-dimensional parameters describing channel environment can be extracted by parametrization performed on the channel information, and finally the real condition of the channel is obtained. To clearly describe this embodiment, the following example describes the acquiring of channel information based on the signals transmitted over a PUSC uplink channel in the WiMAX system.

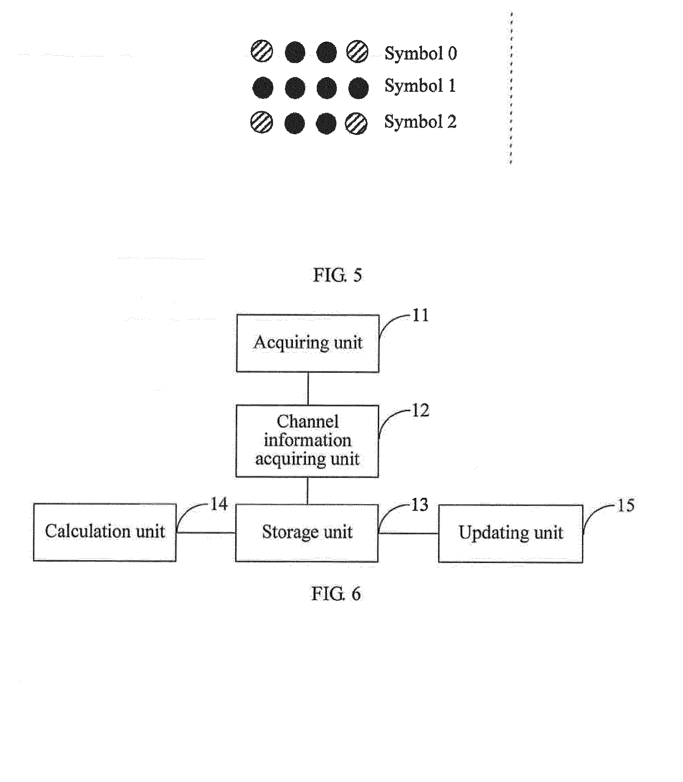

Specifically, in the WiMAX system, a timeslot (slot) in the uplink partial usage of subchannels (Partial Usage of Subchannels, PUSC) consists of three orthogonal frequency division multiple access (Orthogonal Frequency Division Multiple Access, OFDMA) symbols and one subchannel. Each timeslot contains 48 data subcarriers and 24 fixed-position pilots. A subchannel consists of six uplink tiles (tiles), and each tile consists of four continuous subcarriers. FIG. 5 is a schematic structural diagram of a tile. A user terminal, for example, a mobile station (MS) transmits pilots at a fixed position. For example, the MS transmits pilots over the first subcarrier and the fourth subcarrier of the symbol (Symbol) 0 and symbol 2 in a tile shown in FIG. 5, and transmits service data over the remaining subcarriers.

After a signal x transmitted by the terminal is propagated over a channel and the acquiring unit 11 receives a radio signal y transmitted by the terminal, the channel information acquiring unit 12 can acquire pilot information x from a fixed radio position (that is a subcarrier). The pilot information x is the real signal transmitted by the terminal, and the real signal received by the apparatus for acquiring radio network environment information is the radio signal y received by the acquiring unit 11. y=H*x, where H indicates the channel information. In an embodiment, the channel information can be a channel impulse response and is usually expressed as a matrix. Therefore, the channel information acquiring unit 12 can calculate the channel information H by using the formula y=H*x. The signal received by the acquiring unit 11 is y, and y=x*h; the terminal transmits a known pilot sequence at a fixed pilot position, that is, x at the pilot position is known. Therefore, the pilot information h can be calculated by using the formula y=x*h.

After the channel information acquiring unit 12 acquires the channel information, the channel information may be stored in a storage unit 13. The storage unit 13 can be various storage media such as a hard disk.

If other network devices in the radio network detect a transmitting or receiving exception of a user terminal, the channel information stored in the storage unit 13 can be used to reproduce the radio channel environment. For example, channel information can be estimated by using algorithms such as space-alternating generated expectation-maximization SAGE (Space-alternating Generalized Expectation-maximization, SAGE), so as to obtain various parameters regarding the radio channel environment and therefore reproduce the radio channel environment.

With the apparatus for acquiring radio network environment information provided in this embodiment, the radio signals transmitted by a terminal are received, and the channel information is calculated according to the received radio signals and then stored. In this way, when a user terminal or the network encounters an exception, the real condition of the radio channel can be reflected accurately. As a result, the exception to the user terminal or the network can be identified accurately, thereby improving the efficiency of exception handling.

FIG. 6 is a schematic structural diagram of a second embodiment of an apparatus for acquiring radio channel environment information according to the present invention. As shown in FIG. 6, the apparatus includes an acquiring unit 11, a channel information acquiring unit 12, and a storage unit 13.

Based on the preceding embodiment, the channel information acquiring unit 12 can be specifically configured to:
acquire pilot information from radio signals received by acquiring unit 11; and
acquire channel information corresponding to a pilot carried in the radio signals according to the pilot information.

Accordingly, the storage unit 13 is specifically configured to store the channel information corresponding to a pilot.

Specifically, after the acquiring unit 11 receives a radio signal y transmitted by the terminal, the channel information acquiring unit 12 can acquire pilot information x from a fixed radio position (that is a subcarrier). The pilot information x is the real signal transmitted by the terminal, and the real signal received by the apparatus for acquiring radio network environment information is the radio signal y received by the acquiring unit 11. y=H*x, where H indicates the channel information. In an embodiment, the channel information can be a channel impulse response and is usually expressed as a matrix. Therefore, the channel information acquiring unit 12 can calculate the channel information H by using the formula y=H*x. y=H*x only takes into consideration the channel information corresponding to the pilot signal x transmitted by a terminal. However, alternatively, the channel information acquiring unit 12 can also be specifically configured to:
acquire pilot information from radio signals received by acquiring unit 11;
acquire channel information corresponding to a pilot carried in the radio signals according to the pilot information; and
acquire the channel information corresponding to the data carried in the radio signals according to the channel information corresponding to the pilot.

Accordingly, the storage unit is specifically configured to store the channel information corresponding to the pilot and data acquired by the channel information acquiring unit 12.

Specifically, after the channel information acquiring unit 12 acquires the channel information corresponding to a pilot carried in the transmitted signals, it can be seen from FIG. 5 that, for symbol 0 in a tile, the pilot signals are mapped onto the first subcarrier and the fourth subcarrier, and service data transmitted by the terminal are mapped onto the second subcarrier and the third subcarrier. Therefore, channel impulse responses H1 and H2 respectively corresponding to the pilot signals carried on the first subcarrier and the fourth subcarrier can be acquired, and then channel impulse responses corresponding to the service data can be acquired by performing interpolation calculation based on H1 and H2.

Because the channel information acquiring unit 12 acquires the channel impulse responses corresponding to the pilot signals and service data transmitted by the terminal, the real condition of the radio channels are reflected more accurately. As a result, the exception to the user terminal or the network can be identified accurately, thereby improving the efficiency of exception handling.

The apparatus for acquiring radio network environment information may further include:
a calculation unit 14, configured to estimate environment parameters of the radio channels according to the channel information acquired by the channel information acquiring unit 12.

Channel information reflects the environment of a radio channel. Further, channel information can be estimated by using algorithms such as SAGE, so as to obtain various parameters regarding the radio channel environment and therefore comprehensively reproduce the radio channel environment.

Further, the storage unit 13 is a storage medium like a hard disk. The storage medium has a limited storage space. To make full use of the storage space of the storage unit 13 and avoid loss of new channel information due to exhaustion of the storage space of the storage unit 13, an updating unit 15 can be used to update the channel information stored in the storage unit 13 in a first-in-first-out manner. When the data volume stored in the storage unit 13 hits a threshold, the earliest channel information is deleted. In this way, the information stored in the storage unit 13 is updated to timely reproduce the environment of the radio system.

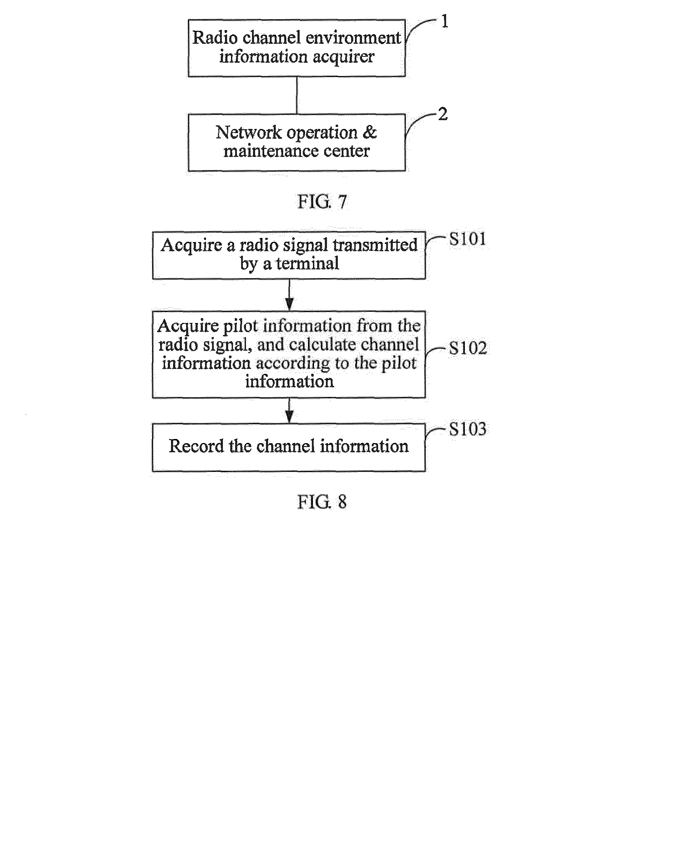

FIG. 7 is a schematic structural diagram of a first embodiment of a radio network control device according to the present invention. As shown in FIG. 7, the radio network control device can be an RNC or an evolved NodeB (evolved Node B, eNB), including an apparatus for acquiring radio network environment information 1 and a network operation & maintenance center 2.

The apparatus for acquiring radio network environment information 1 is configured to acquire a radio signal transmitted by a terminal, acquire pilot information from the radio signal, calculate channel information according to the pilot information, and record the channel information; and
the network operation & maintenance center 2 is configured to acquire the channel information from the apparatus for acquiring radio network environment information 1 so as to identify the exception to the network.

The radio network control device comprises the apparatus for acquiring radio network environment information 1 provided in this embodiment. For the specific structure of the apparatus for acquiring radio network environment information 1, refer to the preceding embodiment.

When an RNC or eNB detects a transmitting or receiving exception to a terminal, the network operation & maintenance center 2 can acquire the channel information stored in the storage unit of the apparatus for acquiring radio channel environment information 1 so as to identify the exception and reproduce the real condition of the radio channel.

With the radio network control device provided in this embodiment, the radio signals transmitted by a terminal are received, and the channel information is calculated according to the received radio signals and then stored. In this way, when a user terminal or the network encounters an exception, the real condition of the radio channel can be reflected accurately. As a result, the exception to the user terminal or the network can be identified accurately, thereby improving the efficiency of exception handling.

FIG. 8 is a flow chart of a first embodiment of a method for acquiring radio channel environment information provided according to the present invention. The method includes:

S101. Acquire a radio signal transmitted by a terminal;

S102. Acquire pilot information from the radio signal, and calculate channel information according to the pilot information; and

S103. Record the channel information.

Further, in S102, the acquiring pilot information from the radio signal, and calculating channel information according to the pilot information may specifically include:
acquiring pilot information from the radio signal; and
acquiring channel information corresponding to a pilot carried in the radio signal according to the pilot information.

Alternatively, in S102, the acquiring pilot information from the radio signal, and calculating channel information according to the pilot information may specifically include:
acquiring pilot information from the radio signal;
acquiring channel information corresponding to a pilot carried in the radio signal according to the pilot information; and
acquiring channel information corresponding to the data carried in the radio signal according to the channel information corresponding to the pilot.

Further, after the channel information is acquired in S102, the channel information can be estimated by using algorithms such as SAGE, so as to obtain various parameters regarding the radio channel environment and therefore comprehensively reproduce the radio channel environment.

Further, in S103, the channel information can be stored in a storage medium like a hard disk. The storage medium has a limited storage space. To make full use of the storage space of the storage medium and avoid loss of new channel information due to exhaustion of the storage space of the storage medium, the first-in-first-out method can be used to update the channel information so as to timely reproduce the environment of the radio system.

The method for acquiring radio channel environment information provided in the present invention corresponds to the apparatus for acquiring radio network environment information provided in the present invention. For detailed implementation process of the method, refer to the embodiment about the apparatus for acquiring radio network environment information, which is not repeated herein.

With the method for acquiring radio channel environment information provided in the embodiments of the present invention, the radio signals transmitted by a terminal are received, and the channel information is calculated according to the received radio signals and then stored. In this way, when a user terminal or the network encounters an exception, the real condition of the radio channel can be reflected accurately. As a result, the exception to the user terminal or the network can be identified accurately, thereby improving the efficiency of exception handling.

Persons of ordinary skill in the art should understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (Read-Only Memory, ROM), a random access memory (Read-Only Memory, RAM), and the like.

Finally, it should be noted that the embodiments of the present invention are intended for describing the technical solutions of the present invention other than limiting the present invention. Although the present invention is described in detail with reference to the foregoing embodiments, persons of ordinary skill in the art should understand that they can still make modifications to the technical solutions described in the foregoing embodiments or make equivalent substitutions to some technical features thereof, without departing from the spirit and scope of the technical solutions of the embodiments of the present invention.

## Claims

1. An apparatus for acquiring radio network environment information, comprising:
an acquiring unit, configured to acquire a radio signal transmitted by a terminal;
a channel information acquiring unit, configured to acquire pilot information from the radio signal, and calculate channel information according to the pilot information; and
a storage unit, configured to record the channel information.

2. The apparatus for acquiring radio network environment information according to claim 1, wherein the channel information acquiring unit is specifically configured to:
acquire pilot information from the radio signal; and acquire channel information corresponding to a pilot carried in the radio signal according to the pilot information; and
the storage unit is specifically configured to: store channel information corresponding to the pilot.

3. The apparatus for acquiring radio network environment information according to claim 1, wherein the channel information acquiring unit is specifically configured to: acquire pilot information from the radio signal; and acquire channel information corresponding to a pilot carried in the radio signal according to the pilot information; and
the storage unit is specifically configured to: store channel information corresponding to the pilot and channel information corresponding to the data.

4. The apparatus for acquiring radio network environment information according to any one of claims 1-3, further comprising:
a calculation unit, configured to estimate parameters regarding radio channel environment according to the channel information acquired by the radio channel information acquiring unit.

5. The apparatus for acquiring radio network environment information according to claim 4, further comprising:
An updating unit, configured to, when the storage capacity of the storage unit hits a threshold, update the stored channel information in a first-in-first-out manner.

6. A method for acquiring radio channel environment information, comprising:
acquiring a radio signal transmitted by a terminal;
acquiring pilot information from the radio signal, and calculating channel information according to the pilot information; and
recording the channel information.

7. The method according to claim 6, wherein the acquiring pilot information from the radio signal, and calculating channel information according to the pilot information comprises:
acquiring pilot information from the radio signal; and
acquiring channel information corresponding to a pilot carried in the radio signal according to the pilot information.

8. The method according to claim 6, wherein the acquiring pilot information from the radio signal, and calculating channel information according to the pilot information comprises:
acquiring pilot information from the radio signal;
acquiring channel information corresponding to a pilot carried in the radio signal according to the pilot information; and
acquiring channel information corresponding to data carried in the radio signal according to the channel information corresponding to the pilot.

9. The method according to any one of claims 6-8, further comprising:
estimating parameters regarding radio channel environment according to the channel information.

10. The method according to any one of claims 6-8, further comprising:
updating stored channel information in a first-in-first-out manner.

11. A radio network control device, comprising an apparatus for acquiring radio network environment information and a network operation & maintenance center, wherein:
the apparatus for acquiring radio network environment information is configured to: acquire a radio signal transmitted by a terminal, acquire pilot information from the radio signal, calculate channel information according to the pilot information, and record the channel information; and
the network operation & maintenance center is configured to acquire the channel information from the apparatus for acquiring radio network environment information so as to identify an exception to a network.
